# EUROPEAN PATENT APPLICATION

(11) **EP 1 672 526 A2**
(43) Date of publication of application: **21.06.2006**
(21) Application number: 05111677.0
(22) Date of filing: 05.12.2005
(51) Int. Cl.: G06F 17/22, G06F 17/24

(54) **File formats, methods, and computer program products for representing documents**

(30) Priority: 20.12.2004 US 18718
(71) Applicant: Microsoft Corporation, Redmond WA 98052 (US)
(72) Inventor: Jones, Brian, c/o Microsoft Corporation, Redmond, WA 98052 (US); Little, Robert, c/o Microsoft Corporation, Redmond, WA 98052 (US); Bishop, Andrew, c/o Microsoft Corporation, Redmond, WA 98052 (US)
(74) Representative: Grünecker, Kinkeldey, Stockmair & Schwanhäusser Anwaltssozietät

(57) **Abstract**

File formats, methods, and computer program products are provided for representing a document in a modular content framework. The modular content framework may include a file format container associated with modular parts. A file format includes logically separate modular parts that are associated with each other by one or more relationships where each modular part is associated with a relationship type. The modular parts include a document part operative as a guide for properties of the document. The modular parts may also include a document properties part containing built-in properties associated with the file format and a thumbnail part containing associated thumbnails. Each modular part is capable of being interrogated separately, extracted from the document, and/or reused in a different document.

## Description

### CROSS-REFERENCE TO RELATED APPLICATIONS

This patent application is related to and filed with U.S. Patent Application, Attorney Docket No. 60001.0447US01, entitled "File Formats, Methods, and Computer Program Products For Representing Workbooks," filed on December 20, 2004; U.S. Patent Application, Attorney Docket No. 60001.0443US01, entitled " File Formats, Methods, and Computer Program Products For Representing Presentations," filed on December 20, 2004; and Attorney Docket No. 60001.0440US01, entitled " Management and Use of Data in a Computer-Generated Document," filed on December 20, 2004; all of which are assigned to the same assignee as this application. The aforementioned patent applications are expressly incorporated herein, in their entirety, by reference.

### TECHNICAL FIELD

The present invention generally relates to file formats, and more particularly, is related to methods and file formats for representing documents in a componentized word processing application program.

### BACKGROUND

The information age has facilitated an era of building complex documents utilizing word processing software applications. However, the way in which previous file formats are created and structured to store a document has several drawbacks. For instance, previous document file formats are created in the form of a single file containing monolithic data. Because proprietary formats are generally used to create these single files, each company that builds document storage develops a different file format. Thus, none of the previous file formats are proficient as a default file format. Because the data within these different file formats is monolithic and inaccessible in discrete parts, a series of problems are created.

One problem for programmers is basic document re-use. For instance, it is difficult to extract one or more documents from one word processing application without running the word processing application and reuse the extracted documents in a different word processing application and retain document integrity, even in the same application. Comparatively, reusing documents between different applications is worse. Reusing content, such as a table or chart, from a document is similarly difficult.

Secondly, because of the monolithic file format, it is practically impossible to lock part of a document. Thus, a feature such as multi-user editing, where a number of people perhaps on different platforms, and/or from different locales cooperatively edit a document with the help of a locking mechanism, is prohibited. Most of the technology in terms of locking is all done at the file level, thus if a file is locked by a user, no other users can edit the file. Viewing is possible, but not editing.

There is also a problem of document file interrogation. Finding content within a document file, for example finding documents for a 2004 sales forecast, can be a daunting task. It is very difficult to find discrete parts within a monolithic file format document where semantics of the content can be determined. This problem exists even when an existing binary file format is documented. It is still difficult to implement reader and writer classes that can handle existing binary file formats well. Even if a tool targeted at an application was developed it could not interrogate all document formats. This problem is referred to as the opaqueness of single file formats.

Document surfacing, the ability to take pieces of one file formatted document and drop them into another document, is also a problem. For instance, a table copied from a word processor document into a presentation document is difficult to interrogate in a monolithic style file format.

Still further, in the case of document previewing, for instance graphically browsing accessible content, it is very difficult to retrieve a high resolution preview of the content exposed through a shell in a browser or in a third party application. Some word processing applications may provide thumbnails or previews of a single page, but none provide high-resolution previews of all of the parts in a document.

Accordingly there is an unaddressed need in the industry to address the aforementioned deficiencies and inadequacies.

### SUMMARY

Embodiments of the present invention provide file formats, methods, and computer program products for representing a document in a modular content framework implemented within a computing apparatus. Embodiments of the present invention disclose an open file format, such as an extensible markup language (XML) file format and/or a binary file format, and a method by which features and data of a document are organized and modeled within a word processing application. The file format is designed such that it is made up of collections and parts. Each collection functions as a folder and each modular part functions as a file. These separate files are related together with relationships where each separate relationship has a relationship type. The relationship type can be used to identify what type of part is being referenced. This design greatly simplifies the way a word processing application organizes document features and data, and presents a logical model that is much less confusing.

One embodiment is a file format for representing a document in a modular content framework. The modular content framework may include a file format container associated with the modular parts. The file format includes modular parts that are logically separate but associated with one another by one or more relationships. Each modular part is associated with a relationship type and the modular parts include a document part operative as a guide for properties of the document. Each modular part is capable of being interrogated separately with or without the word processing application and without other modular parts being interrogated, which offers gains in efficiency when the document is queried.

The modular parts may also include a document properties part containing built-in properties associated with the file format and a thumbnail part containing one or more thumbnails associated with the file format. Each modular part is capable of being extracted from and/or copied from the document and reused in a different document along with associated modular parts identified by traversing or navigating the relationships of the modular part reused. By navigating the relationships, it is possible to determine what other parts the extracted or reused modular part leverages.

Another embodiment is a method for representing a document in a file format wherein modular parts associated with the document include each part written into the file format. The method involves writing a first modular part of the file format and querying the first modular document for relationship types to be associated with modular parts that are logically separate but associated by one or more relationships. Additionally, the method may involve writing a second modular part of the file format separate from the first modular part and establishing a relationship between the first modular part and the second modular part. Each modular part is capable of being interrogated separately without other modular parts being interrogated.

The method may also involve establishing a relationship between the document part and a file format container where the file format container includes a document properties part containing built-in properties associated with the file format and a thumbnail part containing a thumbnail associated with the file format.

Still further, the method may involve writing other modular parts associated with relationship types where the other modular parts that are to be shared are written only once and establishing relationships to the other modular parts written. Writing the other modular parts associated with the relationship types involves examining data associated with the document, determining whether the data examined has been written to a modular part, and when the data examined has not been written to the modular part, writing the modular part to include the data examined.

Still another embodiment is a computer program product including a computer-readable medium having control logic stored therein for causing a computer to represent a document in a file format where modular parts of the file format include each part written into the file format. The control logic includes computer-readable program code for causing the computer to write a document part of the file format, query the document for a relationship type to be associated with a modular part logically separate but associated with the document part by one or more relationships, write the modular part of the file format separate from the document part, and establish a relationship between the document part and the modular part written.

Aside from the use of relationships in tying parts together, there is also a single part in every modular part or file that describes the content types for each modular part. This gives a predictable place to query to find out what type of content is inside the file.

The invention may be implemented utilizing a computer process, a computing system, or as an article of manufacture such as a computer program product or computer readable media. The computer program product may be a computer storage media readable by a computer system and encoding a computer program of instructions for executing a computer process. The computer program product may also be a propagated signal on a carrier readable by a computing system and encoding a computer program of instructions for executing a computer process.

These and various other features, as well as advantages, which characterize the present invention, will be apparent from a reading of the following detailed description and a review of the associated drawings.

### BRIEF DESCRIPTION OF THE DRAWINGS

FIGURE 1 is a computing system architecture illustrating a computing apparatus utilized in and provided by various illustrative embodiments of the invention;
FIGURES 2a-2c are block diagrams illustrating a document relationship hierarchy for various modular parts utilized in a file format for representing a word processor document according to various illustrative embodiments of the invention; and
FIGURES 3-4 are illustrative routines performed in representing documents in a modular content framework according to illustrative embodiments of the invention.

### DETAILED DESCRIPTION

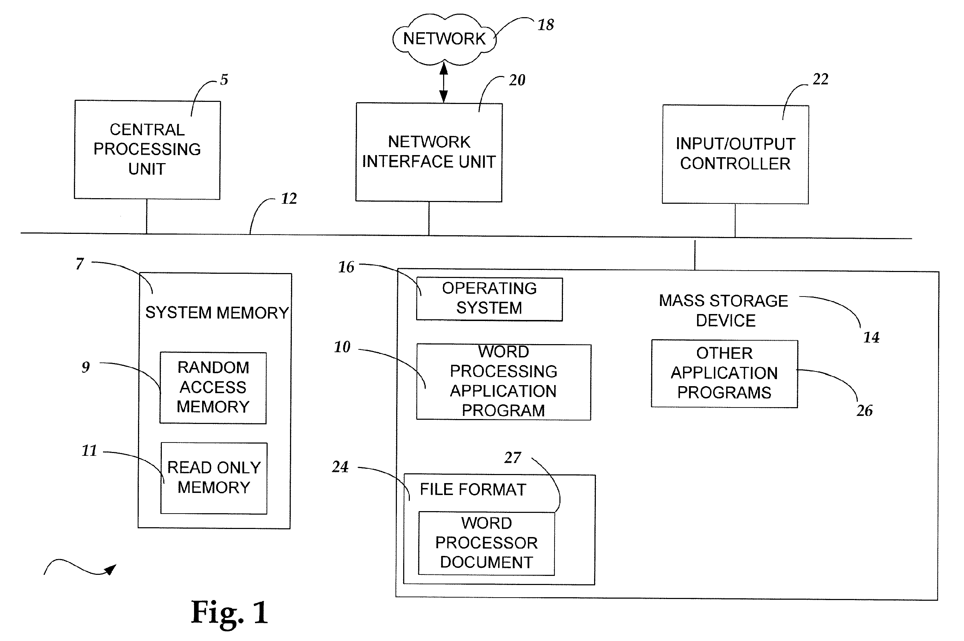

Referring now to the drawings, in which like numerals represent like elements, various aspects of the present invention will be described. In particular, FIGURE 1 and the corresponding discussion are intended to provide a brief, general description of a suitable computing environment in which embodiments of the invention may be implemented. While the invention will be described in the general context of program modules that execute in conjunction with program modules that run on an operating system on a personal computer, those skilled in the art will recognize that the invention may also be implemented in combination with other types of computer systems and program modules.

Generally, program modules include routines, programs, operations, components, data structures, and other types of structures that perform particular tasks or implement particular abstract data types. Moreover, those skilled in the art will appreciate that the invention may be practiced with other computer system configurations, including hand-held devices, multiprocessor systems, microprocessor-based or programmable consumer electronics, minicomputers, mainframe computers, and the like. The invention may also be practiced in distributed computing environments where tasks are performed by remote processing devices that are linked through a communications network. In a distributed computing environment, program modules may be located in both local and remote memory storage devices.

Referring now to FIGURE 1, an illustrative computer architecture for a computer 2 utilized in an embodiment of the invention will be described. The computer architecture shown in FIGURE 1 illustrates a computing apparatus, such as a server, desktop, laptop, or handheld computing apparatus, including a central processing unit 5 ("CPU"), a system memory 7, including a random access memory 9 ("RAM") and a read-only memory ("ROM") 11, and a system bus 12 that couples the memory to the CPU 5. A basic input/output system containing the basic routines that help to transfer information between elements within the computer, such as during startup, is stored in the ROM 11. The computer 2 further includes a mass storage device 14 for storing an operating system 16, application programs, and other program modules, which will be described in greater detail below.

The mass storage device 14 is connected to the CPU 5 through a mass storage controller (not shown) connected to the bus 12. The mass storage device 14 and its associated computer-readable media provide non-volatile storage for the computer 2. Although the description of computer-readable media contained herein refers to a mass storage device, such as a hard disk or CD-ROM drive, it should be appreciated by those skilled in the art that computer-readable media can be any available media that can be accessed by the computer 2.

By way of example, and not limitation, computer-readable media may comprise computer storage media and communication media. Computer storage media includes volatile and non-volatile, removable and non-removable media implemented in any method or technology for storage of information such as computer-readable instructions, data structures, program modules or other data. Computer storage media includes, but is not limited to, RAM, ROM, EPROM, EEPROM, flash memory or other solid state memory technology, CD-ROM, digital versatile disks ("DVJS'), or other optical storage, magnetic cassettes, magnetic tape, magnetic disk storage or other magnetic storage devices, or any other medium which can be used to store the desired information and which can be accessed by the computer 2.

According to various embodiments of the invention, the computer 2 may operate in a networked environment using logical connections to remote computers through a network 18, such as the Internet. The computer 2 may connect to the network 18 through a network interface unit 20 connected to the bus 12. It should be appreciated that the network interface unit 20 may also be utilized to connect to other types of networks and remote computer systems. The computer 2 may also include an input/output controller 22 for receiving and processing input from a number of other devices, including a keyboard, mouse, or electronic stylus (not shown in FIGURE 1). Similarly, an input/output controller 22 may provide output to a display screen, a printer, or other type of output device.

As mentioned briefly above, a number of program modules and data files may be stored in the mass storage device 14 and RAM 9 of the computer 2, including an operating system 16 suitable for controlling the operation of a networked personal computer, such as the WINDOWS XP operating system from MICROSOFT CORPORATION of Redmond, Washington. The mass storage device 14 and RAM 9 may also store one or more program modules. In particular, the mass storage device 14 and the RAM 9 may store a word processing application program 10. The word processing application program 10 is operative to provide functionality for the creation and structure of a word processor document, such as a document 27, in an open file format 24, such as an XML file format and/or a binary file format. According to one embodiment of the invention, the word processing application program 10 and other application programs 26 comprise the OFFICE suite of application programs from MICROSOFT CORPORATION including the WORD, EXCEL, and POWERPOINT application programs.

Embodiments of the present invention greatly simplify and clarify the organization of document features and data. The word processing program 10 organizes the 'parts' of a document (features, data, themes, styles, objects, etc) into logical, separate pieces, and then expresses relationships among the separate parts. These relationships, and the logical separation of 'parts' of a document, make up a new file organization that can be easily accessed, such as by a developer's code.

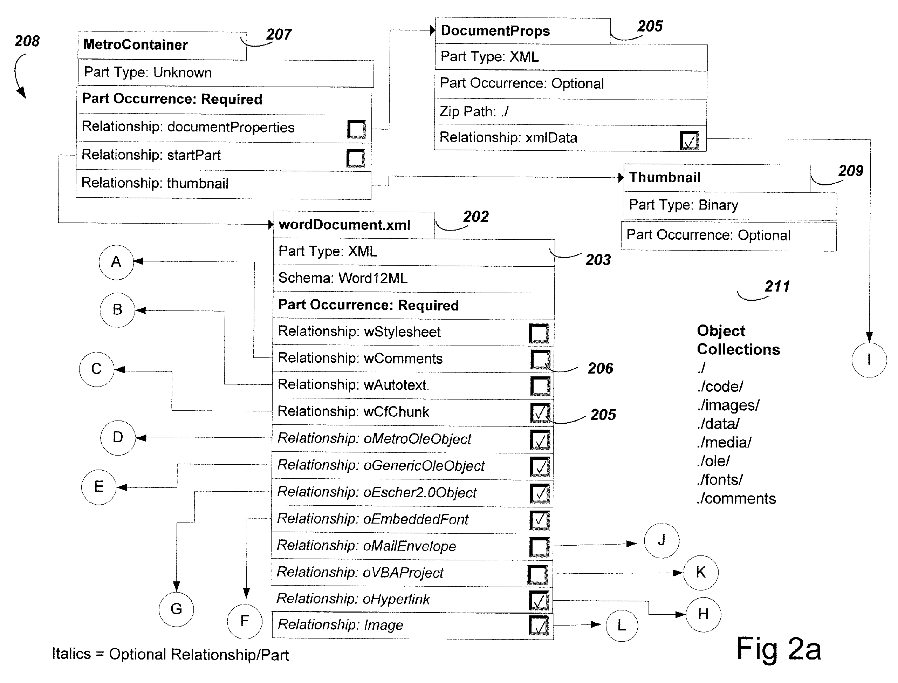

Referring now to FIGURES 2a-2c, block diagrams illustrating a word processor document relationship hierarchy 208 for various modular parts utilized in the file format 24 for representing a document according to various illustrative embodiments of the invention will be described. The word processor document relationship hierarchy 208 lists specific file format relationships some with an explicit reference indicator 205 indicating an explicit reference to that relationship in the content of the modular part, for example via a relationship identifier. An example of this would be an image part 260 referenced by a parent or referring part that references the modular parts with which the parent part has a relationship. In some embodiments of the present invention, it may not be enough to just have the relationship to the image part 260 from a parent or referring modular part, for example from a document part 202. The parent part may also need to have an explicit reference to that image part relationship inline so that it is known where the image goes. Non-explicit indicators 206, indicate that a referring modular part is associated, but not called out directly in the parent part's content. An example of this would be a stylesheet 261, where it is implied that there is always a stylesheet associated, and therefore there is no need to call out the stylesheet 261 in the content. All anyone needs to do to find the stylesheet 261 is just look for a relationship of that type. Optional relationships with respect to validation are indicated in italics.

The various modular parts or components of the presentation hierarchy 208 are logically separate but are associated by one or more relationships. Each modular part is also associated with a relationship type and is capable of being interrogated separately and understood with or without the word processing application program 10 and/or with or without other modular parts being interrogated and/or understood. Thus, for example, it is easier to locate the contents of a document because instead of searching through all the binary records for document information, code can be written to easily inspect the relationships in a document and find the document parts effectively ignoring the other features and data in the file format 24. Thus, the code is written to step through the document in a much simpler fashion than previous interrogation code. Therefore, an action such as removing all the images, while tedious in the past, is now less complicated.

A modular content framework may include a file format container 207 associated with the modular parts. The modular parts include, the document part 202 operative as a guide for properties of the document. The document hierarchy 208 may also include a document properties part 205 containing built-in properties associated with the file format 24, and a thumbnail part 209 containing a thumbnail associated with the file format 24. It should be appreciated that each modular part is capable of being extracted from or copied from the document and reused in a different document along with associated modular parts identified by traversing relationships of the modular part reused. Associated modular parts are identified when the word processing application 10 traverses inbound and outbound relationships of the modular part reused.

Aside from the use of relationships in tying parts together, there is also a single part in every file that describes the content types for each modular part. This gives a predictable place to query to find out what type of content is inside the file. While the relationship type describes how the parent part will use the target part (such as "image" or "styleSheet"), the content or part type 203 describes what the actual modular part is (such as "JPEG" or "XML") regarding content format. This assists both with finding content that is understood, as well as making it easier to quickly remove content that could be considered unwanted (for security reasons, etc.). The key to this is that the word processing application must enforce that the declared content types are indeed correct. If the declared content types are not correct and do not match the actual content type or format of the modular part, the word processing application should fail to open the modular part or file. Otherwise potentially malicious content could be opened.

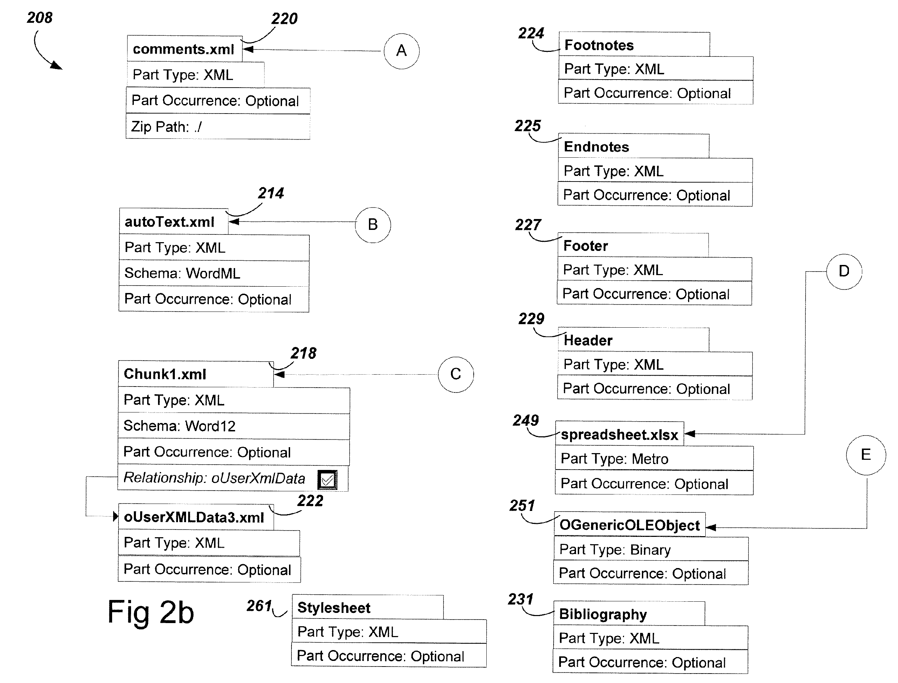

Referring to Fig. 2b, other modular parts may include a comments part 220 containing comments associated with the document, an autotext part 214, for example a glossary containing definitions of a variety of words associated with the document, and a chunk part 218 containing data associated with text of the document. Still further the modular parts may include a user data part 222 containing customized data capable of being read into the document and changed, a footnote part 224 containing footnotes associated with the document, and an endnote part 225 containing endnotes associated with the document.

Other modular parts include a footer part 227 containing footer data associated with the document, a header part 229 containing header data associated with the document; and a bibliography part 231 containing bibliography data and/or underlying data of a bibliography associated with the document. Still further, the modular parts may include a spreadsheet part 249 containing data defining a spreadsheet object associated with the document, an embedded object part 251 containing an object associated with the document, and a font part 253 containing data defining a font associated with the document.

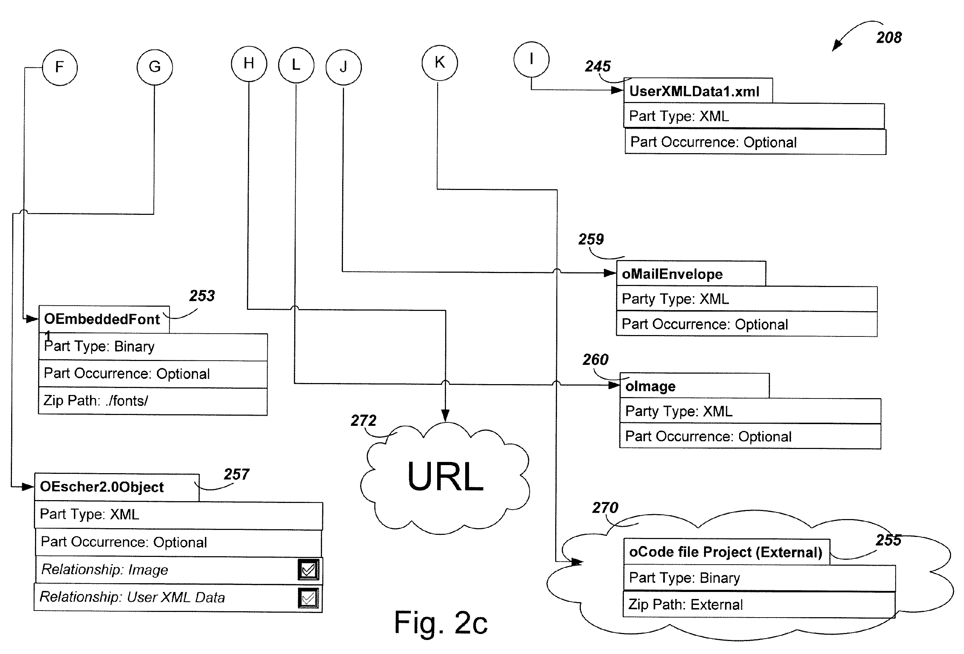

Referring to Fig. 2c, the modular parts also include a drawing object part 257 containing an object, such as an Escher 2.0 object, associated with the document where the drawing object is built using a drawing platform, a mail envelope part 259 containing envelope data where a user of the document has sent the document via electronic mail, a code file part 255 containing code associated with the document where the code file part is capable of being accessed via an external link 270, and a hyperlink part 272 containing a hyperlink associated with the document where the hyperlink part 272 includes a uniform resource locator.

Other modular parts may also include an embedded object part 251 containing an object associated with the document, a second user data part 245 containing customized data capable of being read into the file format container and changed. As an example, embodiments of the present invention make it easier for a programmer/developer to locate an embedded object in a document because any embedded object has an embedded object part 251 separate in the file format 24 with corresponding relationships expressed. The embedded object part 251, as are other modular parts, is logically broken-out and separate from other features & data of the document. It should be appreciated that modular parts that are shared in more than one relationship are typically only written to memory once. It should also be appreciated that certain modular parts are global and thus, can be used anywhere in the file format. In contrast, some modular parts are non-global and thus, can only be shared on a limited basis.

In various embodiments of the invention, the file format 24 may be formatted according to extensible markup language ("XML") and/or a binary format. As is understood by those skilled in the art, XML is a standard format for communicating data. In the XML data format, a schema is used to provide XML data with a set of grammatical and data type rules governing the types and structure of data that may be communicated. The XML data format is well-known to those skilled in the art, and therefore not discussed in further detail herein. The XML formatting closely reflects the internal memory structure. Thus, an increase in load and save speed is evident.

Embodiments of the present invention make documentss more programmatically accessible. This enables a significant number of new uses that are simply too hard for previous file formats to accomplish. For instance, utilizing embodiments of the present invention, a server-side program is able to create a document for someone based on their input. For example, creating a report on Company A for the time period of 1/1/2004-12/31/2004.

FIGURES 2a-2c also include relationship types utilized in the file format 24 according to various illustrative embodiments of the invention. The relationship types associated with the modular parts not only identify an association or dependency but also identify the basis of the dependency. The relationship types include the following: a code file relationship capable of identifying potentially harmful code files, a user data relationship, a hyperlink relationship, a comments relationship, an embedded object relationship, a drawing object relationship, an image relationship, a mail envelope relationship, a document properties relationship, a thumbnail relationship, a glossary relationship, a chunk relationship, and a spreadsheet relationship.

Referring to Fig, 2a also illustrates the listing 211 that lists collection types for organizing the modular parts. The collection types include a code collection including the code file part 255, an images collection including the drawing object part 257, and a data part including the user data part 222. The collection types also include an embeddings collection including the embedded object part 251, a fonts collection including the font part 253, and a comments collection including the comments part 220, the footnote part 224, the endnote part 225, the footer part 227, the header part 229, and/or the bibliography part 231.

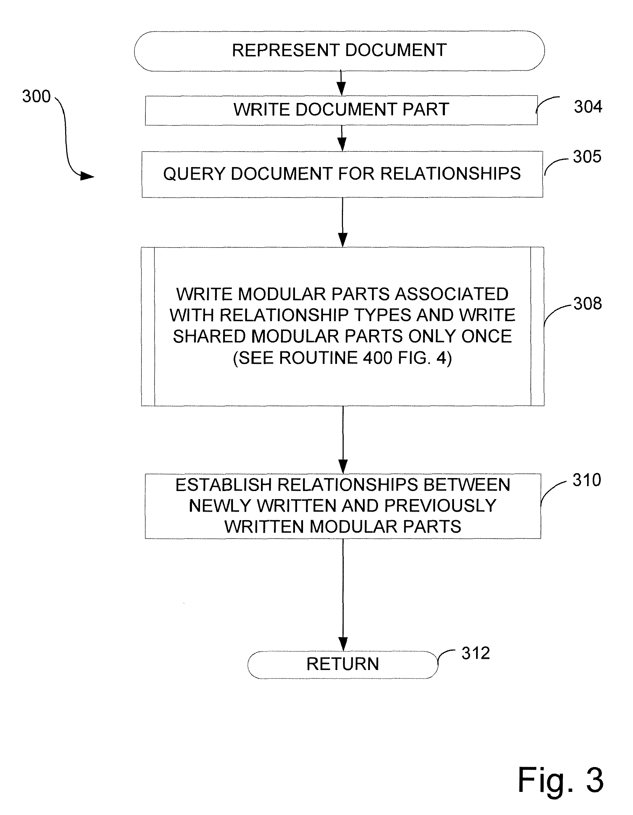

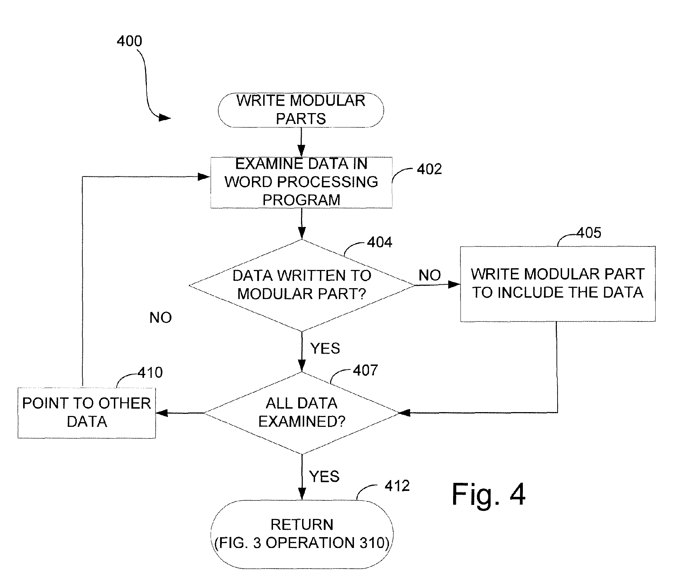

FIGURES 3-4 are illustrative routines performed in representing documents in a modular content framework according to illustrative embodiments of the invention. When reading the discussion of the routines presented herein, it should be appreciated that the logical operations of various embodiments of the present invention are implemented (1) as a sequence of computer implemented acts or program modules running on a computing system and/or (2) as interconnected machine logic circuits or circuit modules within the computing system. The implementation is a matter of choice dependent on the performance requirements of the computing system implementing the invention. Accordingly, the logical operations illustrated in FIGURES 3-4, and making up the embodiments of the present invention described herein are referred to variously as operations, structural devices, acts or modules. It will be recognized by one skilled in the art that these operations, structural devices, acts and modules may be implemented in software, in firmware, in special purpose digital logic, and any combination thereof without deviating from the spirit and scope of the present invention as recited within the claims set forth herein.

Referring now to FIGURES 2a-2c and 3, the routine 300 begins at operation 304, where the word processing application program 10 writes the document part 202. The routine 300 continues from operation 304 to operation 305, where the word processing application program 10 queries the document for relationship types to be associated with modular parts logically separate from the document part but associated with the document part by one or more relationships. Next, at operation 308, the word processing application 10 writes modular parts of the file format separate from the document part. Each modular part is capable of being interrogated separately without other modular parts being interrogated and understood. Any modular part to be shared between other modular parts is written only once. The routine 300 then continues to operation 310.

At operation 310, the spreadsheet application 10 establishes relationships between newly written and previously written modular parts. The routine 300 then terminates at return operation 312.

Referring now to FIGURE 4, the routine 400 for writing modular parts will be described. The routine 400 begins at operation 402 where the word processing application 10 examines data in the word processing application. The routine 400 then continues to detect operation 404 where a determination is made as to whether the data has been written to a modular part. When the data has not been written to a modular part, the routine 400 continues from detect operation 404 to operation 405 where the word processing application writes a modular part including the data examined. The routine 400 then continues to detect operation 407 described below.

When at detect operation 404, the data examined has been written to a modular part, the routine 400 continues from detect operation 404 to detect operation 407. At detect operation 407 a determination is made as to whether all the data has been examined. If all the data has been examined, the routine 400 returns control to other operations at return operation 412. When there is still more data to examine, the routine 400 continues from detect operation 407 to operation 410 where the word processing application 10 points to other data. The routine 400 then returns to operation 402 described above.

Based on the foregoing, it should be appreciated that the various embodiments of the invention include file formats, methods and computer program products for representing documents in a modular content framework. The above specification, examples and data provide a complete description of the manufacture and use of the composition of the invention. Since many embodiments of the invention can be made without departing from the spirit and scope of the invention, the invention resides in the claims hereinafter appended.

## Claims

1. A file format for representing a document created by a word processing application, the file format representing the document in a modular content framework implemented within a computing apparatus, the file format comprising:
modular parts logically separate but associated by one or more relationships wherein each modular part is associated with a relationship type and
wherein the modular parts include:
a document part operative as a guide for properties of the document;
wherein each modular part is capable of being interrogated separately without other modular parts being interrogated.

2. The file format of claim 1, wherein the modular content framework includes a file format container associated with the modular parts wherein the modular parts further include:
a document properties part containing built-in properties associated with the file format; and
a thumbnail part containing thumbnails associated with the file format.

3. The file format of claim 1, wherein each modular part is capable of being one of extracted from and copied from the document and reused in a different document along with associated modular parts identified by traversing relationships of the modular part reused.

4. The file format of claim 3, wherein the modular parts further include at least one of the following:
a comments part containing comments associated with the document;
a glossary part containing definitions of a variety of words associated with the document; and
a chunk part containing data associated with text of the document.

5. The file format of claim 4, wherein the modular parts further includes a user data part containing customized data capable of being read into the document and changed.

6. The file format of claim 4, wherein the modular parts further include at least one of the following:
a footnote part containing footnotes associated with the document;
an endnote part containing endnotes associated with the document;
a footer part containing footer data associated with the document;
a header part containing header data associated with the document; and a bibliography part containing at least one of bibliography data and underlying data of a bibliography associated with the document.

7. The file format of claim 4, wherein the modular parts further include at least one of the following:
a spreadsheet part containing data defining a spreadsheet object associated with the document;
an embedded object part containing an object associated with the document;
a font part containing data defining a font associated with the document;
a drawing object part containing an object associated with the document, the drawing object built using a drawing platform;
a mail envelope part containing envelope data where a user of the document has sent the document via electronic mail;
a code file part containing code associated with the document wherein the code file part is capable of being accessed via an external link; and
a hyperlink part containing a hyperlink associated with the document
wherein the hyperlink part comprises a uniform resource locator.

8. The file format of claim 7, wherein at least some of the modular parts are organized in collection types and wherein the collection types include at least one of the following:
a code collection including the code file part;
an images collection including the drawing object part;
a data part including the user data part;
an embeddings collection including the embedded object part;
a fonts collection wherein the fonts collection includes the font part; and
a comments collection including at least one of the comments part, the footnote part, the endnote part, the footer part, the header part, and the bibliography part.

9. The file format of claim 3, where the relationship types associated with the modular parts comprises at least one of a code file relationship capable of identifying potentially harmful code files, a user data relationship, a hyperlink relationship, a comments relationship, an embedded object relationship, a drawing object relationship, an image relationship, a mail envelope relationship, a document properties relationship, a thumbnail relationship, a glossary relationship, a chunk relationship, and a spreadsheet relationship.

10. The file format of claim 3, wherein content of the document is capable of being one of extracted from and copied from the document and reused in a different document.

11. The file format of claim 3, wherein each modular part is capable of being locked separately while the other modular parts remain available for locking whereby multiple editors may each concurrently edit a modular part of the file format.

12. The file format of claim 3, wherein the modular parts are capable of providing semantics about content within the document when a modular part is interrogated.

13. The file format of claim 3, wherein the file format is capable of providing a high-resolution thumbnail preview of each page in the document.

14. The file format of claim 1, wherein the file format is formatted according to at least one of a markup language format and a binary format.

15. The file format of claim 1, wherein at least one modular part includes a content type that declares a content format of the at least one modular part whereby a query of the content type identifies the content format of the at least one modular part queried.

16. The file format of claim 15, wherein when the content format declared is not correct, the word processing application fails to open the at least on modular part.

17. A method for representing a document in a file format wherein modular parts associated with the document include each part written into the file format, the method comprising:
writing a first modular part of the file format;
querying the document for relationship types to be associated with modular parts logically separate from the first modular part but associated with the first modular part by one or more relationships;
writing a second modular part of the file format separate from the first modular part; and
establishing a relationship between the first modular part and the second modular part;
wherein each modular part is capable of being interrogated separately without other modular parts being interrogated.

18. The method of claim 17, further comprising:
writing other modular parts associated with relationship types wherein the other modular parts that are to be shared are written only once; and
establishing relationships to the other modular parts written.

19. The method of claim 18, wherein writing the other modular parts associated with the relationship types comprises:
a) examining data associated with the document;
b) determining whether the data examined has been written to a modular part;
c) when the data examined has not been written to the modular part, writing the modular part to include the data examined;
d) determining whether other data associated with the document has been examined;
e) examining the other data associated with the document in response to determining that the other data has not been examined; and
repeating b) through e).

20. A computer program product comprising a computer-readable medium having control logic stored therein for causing a computer to represent a document in a file format comprising modular parts wherein the modular parts of the file format include each part written into the file format, the control logic comprising computer-readable program code for causing the computer to:
write a document part of the file format;
query the document for a relationship type to be associated with a modular part logically separate but associated by one or more relationships;
write the modular part of the file format separate from the document part; and
establish a relationship between the document part and the modular part written.
